# FASCICULE DE BREVET EUROPEEN

(11) **EP 3 307 477 B1**
(45) Date de publication et mention de la délivrance du brevet: **09.10.2019**
(21) Numéro de dépôt: 16731333.7
(22) Date de dépôt: 09.06.2016
(51) Int. Cl.: B23Q 3/18, B23Q 17/22, B23Q 17/24

(54) **MODULE D'USINAGE, ENSEMBLE D'ACCESSOIRE POUR MODULE D'USINAGE, ET PROCÉDÉ DE MISE EN TRAIN D'UN MODULE D'USINAGE**
BEARBEITUNGSMODUL, ZUBEHÖRBAUGRUPPE FÜR EIN BEARBEITUNGSMODUL UND VERFAHREN ZUM HOCHFAHREN EINES BEARBEITUNGSMODULS
MACHINING MODULE, ACCESSORY ASSEMBLY FOR A MACHINING MODULE AND METHOD FOR STARTING UP A MACHINING MODULE

(30) Priorité: 11.06.2015 CH 8322015
(43) Date de publication de la demande: 18.04.2018
(73) Titulaire: Watch Out SA, 1204 Genève (CH)
(72) Inventeur: JACOT, Philippe, 2022 Bevaix (CH); LAPORTE, Sébastien, 74300 Thyez (FR)
(74) Mandataire: P&TS SA (AG, Ltd.)
(86) Numéro de dépôt international: PCT/IB2016/053383
(87) Numéro de publication internationale: WO 2016/199046

(56) Documents cités:
- EP-A1- 1 566 240
- EP-A1- 2 308 641
- DE-A1- 10 251 829

## Description

La présente invention concerne un ensemble d'accessoires, un module d'usinage, par exemple un module d'usinage par enlèvement de copeaux, par exemple une décolleteuse ou une machine transfert, et un procédé de mise en train d'un module.

### Etat de la technique

La fabrication de pièces au moyen de modules d'usinage (machines-outils), notamment de décolleteuses, de tours automatiques, de fraiseuses et de machines transferts, comporte typiquement trois phases distinctes :

Dans une première phase de mise au point (ou préréglage), l'opérateur (par exemple un décolleteur) définit et teste sur un module d'usinage le plan d'usinage, c'est-à-dire la succession d'opérations et de déplacements d'axes nécessaires pour obtenir la pièce à usiner désirée. L'opérateur veille par exemple à obtenir le plan d'usinage le plus efficace possible, c'est-à-dire celui qui permet d'usiner une pièce donnée avec un minimum d'opérations et en évitant les collisions entre outils ou avec la pièce. Il choisit les outils à employer, et vérifie la qualité des pièces obtenues, par exemple les états de surface, le respect des tolérances, etc.

Dans une deuxième phase de production, une série de pièces sont produites sur le module d'usinage préréglé, avec les paramètres définis lors de la mise au point. Cette phase est la seule phase productive ; elle est souvent effectuée 24h sur 24, le module d'usinage étant alimenté en matière brute au moyen d'un ravitailleur ou d'un chargeur de lopins (pièces brutes).

Il arrive que la production d'une série de pièces soit interrompue, par exemple pour produire un autre type de pièces sur le même module d'usinage, pour la maintenance de la machine, etc, puis reprise ultérieurement. Dans un tel cas, une phase de mise en train est nécessaire pour appliquer les paramètres définis précédemment lors de la mise au point. Cette mise en train est plus rapide que la mise au point.

Lors de la mise en train, il est souvent nécessaire de remplacer les outils montés sur la machine par un autre jeu d'outils adaptés à l'usinage qui doit être effectué. La précision du positionnement de ces outils détermine la qualité de l'usinage, mais est difficile à reproduire lors de mises en train successives.

En particulier, il est difficile de garantir que l'usinage sur des modules d'usinage différents produise les mêmes résultats, même en transférant les outils ou les porte-outils d'un module à l'autre. En effet, le positionnement du canon ou autre support de pièce varie également d'un module à l'autre.

La mise au point se fait généralement sur le module d'usinage destiné à la production, afin d'assurer que cette production soit effectuée avec les paramètres préréglés permettant d'obtenir les résultats testés lors de la mise au point. Il en résulte une interruption de la production (c'est-à-dire un temps mort) et une immobilisation de la machine de production pendant la durée de la mise au point.

Différentes solutions ont donc été proposées dans l'art antérieur afin de réduire la durée de cette phase de mise au point ou celle de la mise en train.

DE1602821A1 décrit par exemple un dispositif externe de mise au point. Ce dispositif permet de faire une mise au point en dehors de la machine-outil, et de tester les paramètres obtenus avant la phase de production sur la machine de production. La mise au point est effectuée avec un outil monté sur un porte-outil amovible qui est ensuite transféré sur la machine de production, afin de s'assurer que la qualité de la production ne soit pas affectée par un changement d'outil ou de positionnement des outils dans leur porte outil.

US3282138A décrit une machine-outil à contrôle numérique. Un dispositif numérique de positionnement permet de corriger le positionnement d'un porte-outil amovible, en enregistrant les paramètres de positionnement requis sur des rubans perforés. Cette solution souffre des mêmes problèmes que le document ci-dessus et permet uniquement de corriger les différences de positionnement des outils.

US4776247 décrit un autre circuit numérique permettant de reproduire lors de la production la position des outils prédéterminée lors de la mise au point, et donc de réduire le temps de mise en train.

US3625097A décrit un procédé de préréglage d'outils par rapport à leur porte-outil. Le procédé met en oeuvre un dispositif de mise au point externe avec des porte-outils amovibles qui peuvent être ensuite transférés sur la machine-outil de production. La machine-outil reproduit correctement le positionnement entre porte-outils.

US3555690A concerne un dispositif de simulation permettant le préréglage d'une machine-outil, mettant en oeuvre un dispositif de mise au point externe.

US3867763A décrit un dispositif de préréglage de machine-outil, mettant en oeuvre un dispositif de mise au point externe avec des porte-outils amovibles.

EP1566240A décrit un dispositif d'alignement permettant de commander manuellement l'orientation d'une machine par rapport à la surface d'une pièce à usiner, et ce grâce à la direction après réflexion sur cette surface d'un faisceau lumineux.

EP 2308641A concerne un porte-outil pour l'adaptation d'un outil à mesurer dans un dispositif de mesure, permettant d'étalonner la position d'une pièce dans le porte-outil.

DE10251829A se rapporte à un arrangement pour la mesure de la dérive thermique affectant le positionnement relatif entre un outil de la machine-outil et la pièce à usiner, au moyen de marques de référence fixées à la table d'usinage.

Ces différentes solutions permettent ainsi de mettre au point et de tester un plan d'usinage hors du module d'usinage destiné à la production. Elles permettent aussi de tester les outils et leur montage sur le porte-outil, et de s'assurer que le montage précis des outils sur leur porte-outil soit reproduit lors de la production.

Ces solutions ne permettent malgré tout pas d'assurer une reproductibilité parfaite des résultats sur la machine de production ; en effet, il est difficile d'assurer un repositionnement parfait des outils par rapport à la pièce à usiner.

### Bref résumé de l'invention

Un but de la présente invention est de proposer un module d'usinage, un ensemble d'accessoires pour module d'usinage et un procédé de mise en train pour module d'usinage qui soient exempts des limitations de l'art antérieur.

Selon l'invention, ces buts sont atteints notamment au moyen d'un ensemble d'accessoires pour module d'usinage par enlèvement de copeau, comportant :
au moins un porte-outil muni d'une première cible comme référence de positionnement;
un support de pièce muni d'une deuxième cible comme référence de positionnement ;
les premières et deuxièmes cibles étant agencées pour coopérer afin de permettre la mesure de leur position relative

Les premières et deuxièmes références de positionnement permettent de vérifier le positionnement et la direction de déplacement du ou des porte-outils avec le support de pièce. On garantit ainsi un alignement et/ou un positionnement mutuel précis, indépendamment du positionnement et de l'alignement par rapport au bâti du module d'usinage. D'éventuelles erreurs de positionnement et/ou de direction peuvent être compensées.

La coopération de cibles comporte leur superposition.

Les cibles agencées pour coopérer sont des cibles arrangées de manière à ce que leur superposition permette la mesure facilitée de leur position relative.

Le porte-outil peut être fixé de manière amovible sur un chariot (peigne) du module d'usinage. A cet effet, il peut par exemple comporter des moyens de fixation amovibles, par exemple une ou des goupilles, ou des portions, par exemple des trous ou des surfaces de référence, aptes à coopérer avec le chariot mobile.

Le porte outil peut comporter plusieurs outils fixés de manière amovible.

Le support de pièce peut être prévu pour être monté de manière amovible sur un module d'usinage. A cet effet, il peut par exemple comporter des moyens de fixation amovibles, ou des portions, par exemple des trous ou des surfaces de référence, aptes à coopérer avec des moyens de fixation amovibles liés à un module d'usinage externe.

Le support de matière peut être un canon de décolleteuse.

Le support de matière peut être une pince ou un mandrin.

Le support de matière peut être une palette ou un porte-palette.

Il est aussi possible d'intégrer ou de fixer la cible sur la pièce à usiner.

Les premières et deuxièmes références de positionnement permettent de déterminer le positionnement relatif du support de pièce et du porte-outil, et de le corriger s'il ne correspond pas à la valeur attendue. De la même façon, la direction effective de déplacement du porte-outil (par exemple lorsqu'une consigne de déplacement dans une direction donnée est donnée) peut être mesurée et mémorisée.

On parle alors de goupillage du support de pièce avec le porte-outil : ces deux éléments sont toujours alignés et positionnés de manière précise l'un par rapport à l'autre, à la même distance et avec la même orientation.

Le ou les porte-outils et le support de pièces peuvent être transférés non seulement entre différents modules d'usinage, mais aussi entre un module de mise au point et un module d'usinage.

Cette solution présente aussi l'avantage par rapport à l'art antérieur de permettre le transfert non seulement du porte-outil, mais aussi du support de pièce, entre un module de mise au point et un module d'usinage. On s'assure ainsi que l'usinage sera effectué avec le porte-outil et avec le support de pièce préalablement testés sur un module de mise au point; les éventuels défauts du support de pièce, par exemple des imprécisions de positionnement, de concentricité etc, peuvent ainsi être mesurés lors de la mise au point, et corrigés ou compensés lors de la production.

Les premières et deuxièmes références de positionnement sont constituées par des cibles optiques. L'alignement entre ces cibles superposées garantit le positionnement correct du porte-outil avec le support de pièce. Le système de contrôle de positionnement peut comprendre une caméra filmant les cibles superposées, et un module informatique d'analyse d'image.

Les dispositifs de contrôle de positionnement permettent de vérifier le positionnement du porte-outil et du support de pièce dans un seul plan X-Y, et éventuellement la direction de déplacement Thêta dans ce plan. On évite ainsi la difficulté de positionnement et d'orientation selon l'axe Z, généralement moins sensible. Il en résulte un dispositif plus économique et plus simple à aligner.

Dans un autre mode de réalisation, lorsqu'un positionnement précis des outils et de la pièce selon Z est également nécessaire, le dispositif de contrôle de positionnement peut être prévu pour permettre également un positionnement précis dans un ou plusieurs plans incluant l'axe Z.

L'invention a aussi pour objet un module d'usinage tel que défini dans la revendication 6.

Le module d'usinage peut comporter un dispositif de contrôle de positionnement pour contrôler le positionnement des références de positionnement.

Le dispositif de contrôle de positionnement peut être fixe et lié au bâti du module d'usinage.

Le dispositif de contrôle de positionnement peut être amovible.

Le dispositif de contrôle de positionnement peut comporter par exemple une caméra pour vérifier l'alignement des cibles optiques. La caméra peut capturer une image 2D des cibles superposées. Un module de traitement d'image peut analyser l'image des cibles superposées, et envoyer des signaux de correction d'alignement à la commande numérique du module d'usinage.

Dans le cas d'un système optique, la mesure peut se faire en vérifiant la position de pièces immergées dans un liquide, par exemple dans l'huile. On évite ainsi les erreurs de mesures dues à d'éventuelles projections d'huile de coupe ou à la présence de copeaux ou de saletés.

Le module d'usinage peut comporter un dispositif de correction de position pour positionner au moins un porte-outil par rapport audit support de pièce. Ce déplacement peut être manuel, par exemple au moyen d'une ou plusieurs vis micrométriques, et/ou motorisé. Il peut être effectué selon plusieurs axes, par exemple selon les axes X et Y du module d'usinage, et/ou selon des axes de rotation. Le déplacement du ou des porte-outils peut être effectué dans un plan parallèle au plan des cibles.

L'invention a aussi pour objet un procédé de mise en train d'un module d'usinage pour la production d'une série de pièces spécifiques, tel que défini dans la revendication 17.

### Brève description des figures

Des exemples de mise en oeuvre de l'invention sont indiqués dans la description illustrée par les figures annexées dans lesquelles :
- La figure 1 illustre une vue en coupe d'un module d'usinage selon un mode de réalisation de l'invention.
- La figure 2 illustre une vue en perspective d'un module de mise au point selon un mode de réalisation de l'invention.
- La figure 3 illustre schématiquement le transfert du porte-outil et du support de pièce entre un module de mise au point et un module d'usinage.
- La figure 4 illustre schématiquement le montage des porte-outils et du support de pièce sur un module de mise au point ou sur un module d'usinage.
- La figure 5 illustre une vue en coupe un exemple de système de contrôle de positionnement selon un mode de réalisation de l'invention.
- La figure 6 illustre schématiquement un exemple de système de contrôle de positionnement selon un mode de réalisation de l'invention.
- La figure 7 illustre schématiquement un système de contrôle de positionnement selon un mode de réalisation de l'invention, l'illumination étant du côté opposé à la caméra par rapport aux cibles.
- La figure 8 illustre schématiquement un système de contrôle de positionnement selon un mode de réalisation de l'invention, l'illumination étant du même côté que la caméra par rapport aux cibles.

### Exemple(s) de mode de réalisation de l'invention

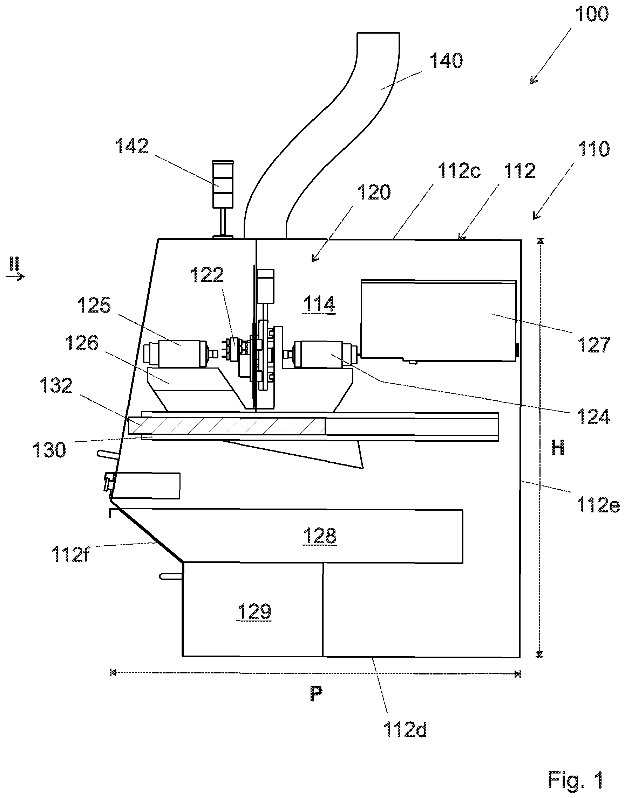

Le module d'usinage 110 illustré sur la figure 1 forme un bloc compact, délimité par un capot de protection 112 constituant une enveloppe fermée délimitant une enceinte 114 pouvant être rendue relativement étanche. Ce capot de protection 112 comporte deux parois latérales 112a et 112b verticales parallèles entre elles, une paroi supérieure 112c horizontale et parallèle à une paroi inférieure liée au bâti 112d, une paroi arrière 112e verticale, et une paroi avant 112f à plusieurs pans comportant une porte frontale.

Une fenêtre dans la paroi avant 112f permet de visualiser l'enceinte 114 renfermant notamment un ensemble d'usinage 120. Cet ensemble d'usinage 120 comporte au moins un porte-outil 122, une broche 124 et une contre-broche 125. Le ou les porte-outils 122 sont montés de manière amovible sur un chariot ou peigne motorisé mobile, comme on le verra.

L'ensemble d'usinage 120 est monté sur un chariot mobile 130. Sur la figure, ce chariot mobile 130 se présente sous la forme d'un tiroir. De préférence, le chariot 130 forme un réceptacle apte à récupérer tout liquide de lubrification, notamment de l'huile, et les copeaux de matière résultant de l'usinage d'une pièce par l'ensemble d'usinage. Pour permettre le mouvement d'avancée hors de l'enceinte 114 et le mouvement de recul dans l'enceinte de ce chariot mobile 130, ce dernier est monté sur des moyens de guidage 132. En particulier, ces moyens de guidage 132 peuvent se présenter sous la forme de rails.

L'ensemble d'usinage 120 est disposé sur une base de support 126, sur laquelle sont montés la broche 124 et la contre-broche 125, ainsi que le ou les porte-outils amovibles 122. La base de support 126 est reçue directement sur le chariot mobile 130. De cette façon, on comprend qu'il est possible de changer un ensemble d'usinage 120 complet d'un module d'usinage, en séparant simplement la base de support 126 du chariot mobile 130, et en y plaçant une nouvelle base de support 126 équipée d'un autre ensemble d'usinage 120.

Le module d'usinage 110 comporte encore une armoire électrique, non représentée sur la figure, située par exemple sur la paroi arrière 112e. Cette armoire électrique est disposée dans l'enceinte 114, ou à l'extérieur de l'enceinte 114. L'enceinte 114 comporte également un bac à copeaux 128, sous le chariot mobile 130, et un bac à huile 129, sous le bac à copeaux 128. Afin de récupérer l'huile et les copeaux dans les bacs dédiés 128 et 129, le fond du chariot 130 est muni de trous. Une goulotte solidaire du chariot peut être prévue pour guider les copeaux.

Egalement, le module d'usinage 110 dispose d'un système d'aspiration de vapeurs présente dans l'enceinte et qui est équipé d'une cheminée d'évacuation de vapeurs 140.

Pour faciliter le contrôle visuel de l'état de fonctionnement de chaque module d'usinage 110, on prévoit avantageusement un indicateur visuel de l'état de fonctionnement, tel qu'une lampe de signalisation 142 (voir les figures 1 à 3).

Le module d'usinage 110 comprend en outre un magasin de barres à usiner 127 situé dans l'enceinte 114, à l'arrière de l'ensemble d'usinage 120. Ce magasin de barres à usiner 127 alimente l'ensemble d'usinage 120 barre par barre, à la façon d'un magasin de cartouches d'armes. Ainsi, ce magasin de barres à usiner 127 forme un ravitailleur pour l'ensemble d'usinage 120, en alimentant le support de pièce 123 avec la matière brute, donc par l'arrière du module d'usinage 110 (par la droite sur les figures). Des séries de barres de différents diamètres, et/ou de différentes matières déjà prêtes permettent à l'opérateur de recharger le magasin 127 de façon rapide et facile.

Les barres présentent de préférence une longueur inférieure à 1 mètre. Avec des barres à usiner assez courtes, on réduit non seulement l'encombrement au sol du magasin 127, mais on contribue de plus à réduire les vibrations lors de l'usinage de la barre, ce qui est un gage de stabilité du procédé d'usinage et donc d'une bonne qualité d'usinage. De plus, la courte taille de la barre permet de faire avancer la barre sans guidage particulier jusqu'au support de pièce 123.

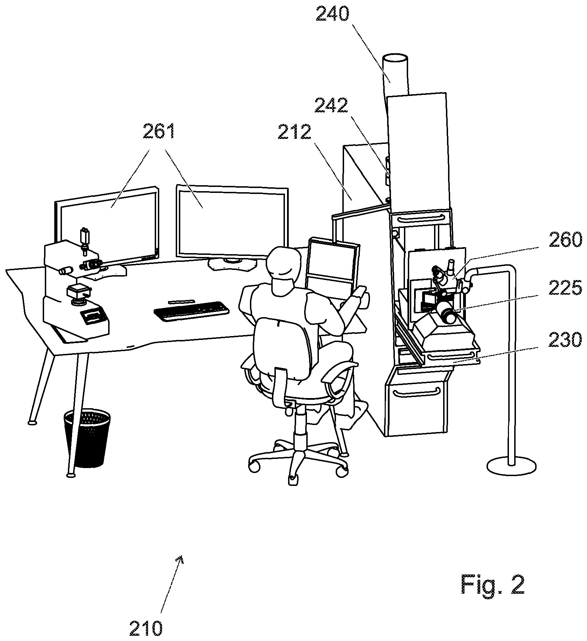

La figure 2 illustre un module de mise au point 210 selon un mode de réalisation de l'invention. De nombreux éléments de ce module de mise au point sont similaires ou identiques à ceux du module d'usinage 110 et ne seront pas décrits plus en détail. L'unité de mise au point 210 comporte notamment un chariot 230 mobile dans le capot de protection 212 et permettant d'extraire ou d'introduire les éléments d'usinage, notamment une broche similaire à la broche 124 avec son support de pièce, une contre-broche 225 et les porte-outils détaillés plus loin. L'élément 240 est une cheminée pour l'évacuation des vapeurs, 242 est un feu lumineux signalant la marche ou l'arrêt du module de mise au point. Tous les autres éléments du module d'usinage décrits en relation avec la figure 1 peuvent être présents dans le module de mise au point. Ce module n'étant cependant pas destiné à la production en série de grandes quantités de pièces, il est cependant possible de simplifier certains éléments destinés à la production rapide ou de grandes séries ; par exemple, il est possible de prévoir un ravitailleur plus petit ou moins rapide, des bacs de récupération d'huile et d'air plus petits, etc.

Le module de mise au point 210 comporte par ailleurs au moins une caméra de haute résolution et/ou au moins un capteur, dont le module d'usinage 110 est dépourvu, afin de mettre au point l'usinage sur ce module et de vérifier la qualité des pièces produites. Ce capteur peut par exemple comporter un palpeur, un rugosimètre, un calibre, une colonne de mesure de hauteur, un système de vision basé sur une ou plusieurs caméras haute résolution et/ou haute fréquence, etc. Les résultats de mesure peuvent être affichés sur un ou plusieurs écrans 261.

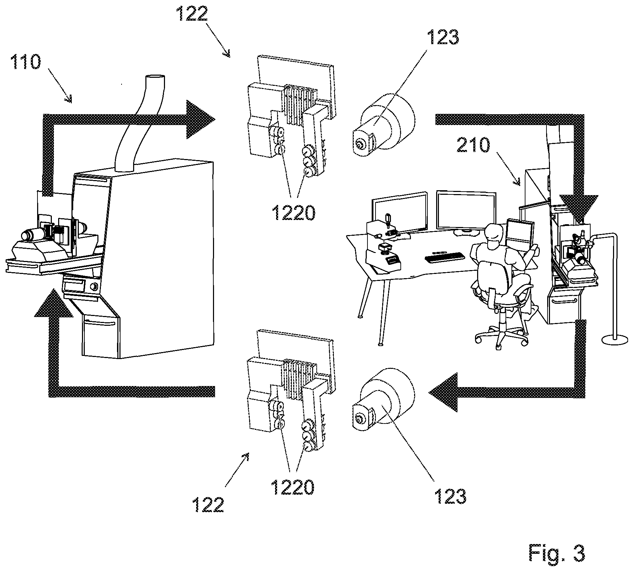

Les outils sont répartis en groupes d'outils 1220, chaque groupe d'outils comportant un ou plusieurs outils les uns à côtés des autres. Un ou plusieurs groupes d'outils sont solidaires d'un même porte-outil 122. La machine peut comporter plusieurs porte-outils 122. Au moins un de ces porte-outils est monté de manière amovible, par exemple à l'aide de goupilles, sur un chariot mobile (dit peigne) du module de mise au point 210 respectivement du module d'usinage 110. Il est ainsi possible de transférer un porte-outil 122 d'un module à l'autre, comme illustré schématiquement sur la figure 3. De la même façon, le support de pièce 123 est monté de manière amovible, à l'aide d'un dispositif de fixation 1232, sur le module de mise au point 210 et sur le module d'usinage 110, de manière à pouvoir être transférés d'un module à l'autre. Des dispositifs de correction de position permettent avantageusement de compenser la position relative du ou de chaque porte-outil par rapport au support de pièce, comme on le verra plus loin.

Un ou plusieurs outils peuvent être montés de manière amovible sur le porte-outil correspondant. La position relative de chaque outil par rapport au porte-outil 122, et/ou la position de l'arête de coupe, peut être mesurée et stockée numériquement, afin par exemple d'appliquer une correction numérique appropriée en cas d'erreur de placement, au moyen d'éléments de mesure et de correction connus en soi et distincts des moyens de compensation de la position du porte-outil..

Le support de pièce 123 peut comporter par exemple un canon, c'est-à-dire un élément capable de guider une barre de matière tenue par la broche, un mandrin ou une pince capable de tenir elle-même la matière. Avantageusement, le support de pièce comporte un canon convertible en pince.

Après la mise au point d'un plan d'usinage, le porte-outil amovible 122 et le support de pièce amovible 123 peuvent donc être transférés depuis le module de mise au point 210 vers le module d'usinage 110. On garantit ainsi que l'usinage sera effectué avec le porte-outil et avec le support de pièce qui ont permis d'obtenir les qualités et les résultats testés et approuvés lors de la mise au point. Des défauts liés au changement de porte-outils ou au changement de support de pièce sont ainsi évités. Avantageusement, un porte-outil et un support de pièce utilisés pour la mise au point d'une pièce particulière sont associés à cette pièce et à son programme de pièce dans un inventaire, et utilisés uniquement pour l'usinage de cette pièce ; ce kit est stocké entre deux séries d'usinage de cette pièce.

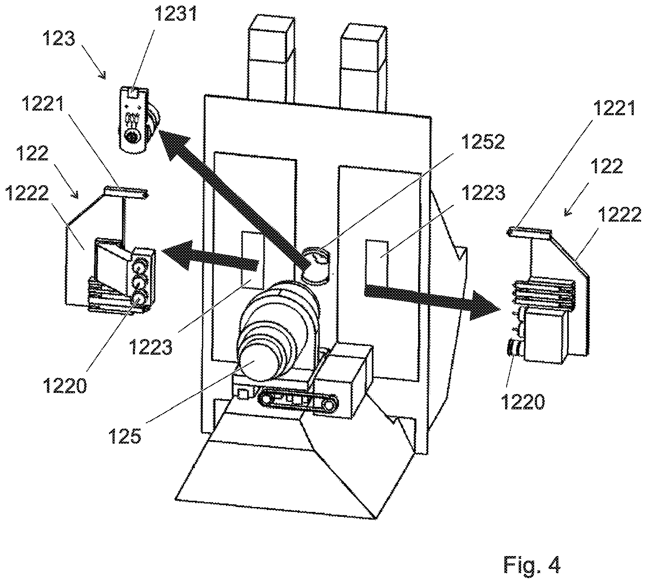

La figure 4 illustre schématiquement le montage de deux porte-outils 122 et d'un support de pièce 123 sur un module, par exemple sur un module de mise au point ou sur un module d'usinage.

Chaque porte-outil 122 est fixé sur un chariot (peigne) du module 110 respectivement 210 au moyen d'un dispositif de fixation 1223, de manière à pouvoir le déplacer et à corriger sa position de manière motoriseé. Les erreurs de positionnement du porte-outil 122 par rapport au chariot, ou les différences de positionnement par rapport au positionnement sur la machine de mise au point, sont ainsi compensées en modifiant de manière correspondante le déplacement du chariot.

Chaque porte-outil 122 comporte en outre une référence de positionnement 1221 sous forme de cible optique montée sur un support de cible 1222, comme on le verra plus loin. On prévoira avantageusement plusieurs références de positionnement distinctes lorsque la machine comporte plusieurs porte-outils 122 sur plusieurs chariots (peignes). De la même manière, le support de pièce 123 est monté au moyen d'un dispositif de fixation 1232 et comporte également une référence de positionnement 1231, sous forme de cible optique détaillée plus bas. Le positionnement relatif des références de positionnement lié à chaque porte-outil et au support de pièce peut être contrôlé, par exemple au moyen d'un système de vision lié au bâti et qui permet de mesurer la distance selon les axes x et y entre les références de positionnement 1221 et 1231. Dans un mode de réalisation avantageux, le système commande un déplacement du chariot porte-outil selon une direction prédéterminée et mesure la différence Theta entre la direction de déplacement effective mesurée sur l'image et la direction de consigne. Il est ainsi possible de compenser les erreurs d'orthogonalité des axes x,y.

Les erreurs de positionnement et de direction de déplacement ainsi mesurées sont compensées, par exemple au moyen des axes de ce porte-outil , afin d'obtenir lors de l'usinage un positionnement et une orientation relatifs des porte-outils et du support de pièce correspondant aux valeurs utilisées lors de la mise au point.

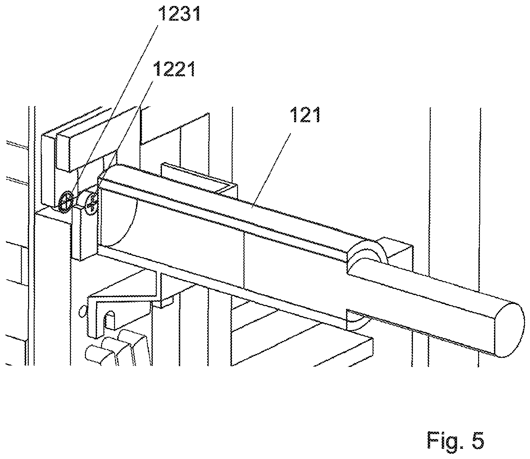

La figure 5 illustre une vue en perspective et partiellement en coupe des deux références de positionnement 1221 et 1231 liés respectivement au porte-outil et au support de pièce et superposés lors de leur montage sur l'un des modules 110 ou 210. Un dispositif de contrôle de positionnement 121 fixe et lié au bâti du module 110 respectivement 210 permet de vérifier le positionnement relatif correct entre les deux cibles 1221, 1231, et de compenser ce positionnement en cas d'erreur ou de différence par rapport au positionnement utilisé sur la machine de mise au point. Le dispositif de contrôle de positionnement 121 peut être constitué par une caméra munie d'un objectif de type microscope, ou un système optique capable de saisir une image des différentes cibles optiques 1221, 1231 superposées, afin de vérifier leur positionnement relatif. Un système informatique de vision permet de mesurer la distance x,y et l'erreur de direction de déplacement Theta entre les cibles 1221 et 1231, afin d'appliquer une compensation correspondante.

Il est aussi possible, bien que moins avantageux, de prévoir un dispositif de contrôle de positionnement, par exemple une caméra, solidaire d'un porte-outil ou du support de pièce. Cette solution impose cependant un dispositif de contrôle par porte-outil ou par support.

De la même façon, il est aussi possible de prévoir une cible liée au support de pièce sur la contre-broche 125, et une cible liée à un ou plusieurs porte-outils en contre-opération, afin de contrôler leur positionnement relatif et/ou relativement au porte-pièce principal 123.

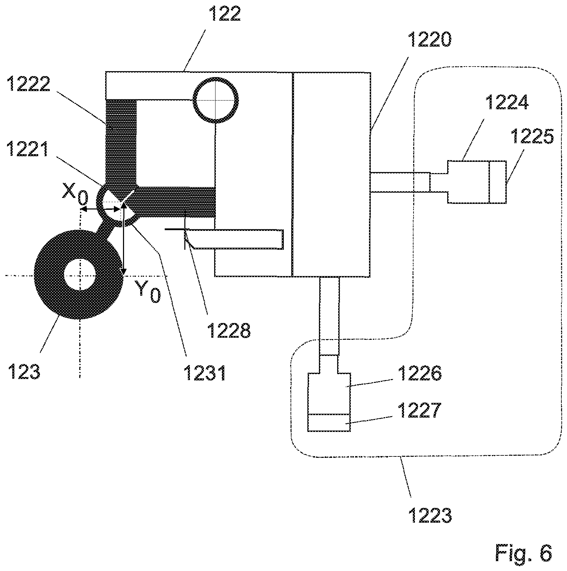

La figure 6 illustre de manière schématique la superposition de la cible 1231 associée au support de pièce 123 (par exemple un canon ou une broche) et de la ou des cibles 1221 associées à un ou plusieurs porte-outils 122. Comme on le voit, la cible 1231 associée au support de pièce est montée de manière décentrée par rapport au canon 123, l'axe de cette cible étant néanmoins parallèle à celui du canon. De la même manière, la cible 1221 montée sur chaque porte-outil 122 est déportée au moyen des supports de cible 1222. Le dispositif de correction de position du porte-outil comporte un moteur 1224 muni d'un encodeur 1225 qui permet de corriger la position xₘ de chaque porte-outil selon l'axe x, afin de corriger d'éventuelles erreurs de positionnement en x des cibles 1221-1231. De la même manière, un moteur 1226 muni d'un encodeur 1227 permet de corriger la position yₘ selon l'axe y de chaque porte-outil, afin de déplacer le porte-outil lors de l'usinage en tenant compte d'éventuelles erreurs de positionnement en x des cibles 1221-1231. De la même manière, un moteur 1226 muni d'un encodeur 1227 permet de modifier la position yₘ selon l'axe y de chaque porte-outil, afin de corriger d'éventuelles erreurs de positionnement en y des cibles 1221-1231. L'élément 1220 est un groupe d'outils sur le porte-outil déplaçable en x et en y, tandis que la pointe d'un des outils montée sur ce porte-outil est indiquée par la référence 1228. Comme indiqué, la position de cette pointe par rapport à une référence du porte-outil peut être mesurée et stockée informatiquement. Une correction d'orientation dans le plan x-y peut aussi être envisagée.

Les cibles 1221, 1231 peuvent comporter par exemple des motifs en croix ou en étoile, ou d'autres motifs facilitant la vérification de l'alignement des cibles superposés selon les axes linéaires X et Y, ainsi que la direction Theta de déplacement de la cible 1231 dans un référentiel lié au support de pièce. Ces motifs peuvent par exemple être imprimés par photolithographie sur un substrat de verre. Il est aussi possible d'imprimer une identification unique de chaque cible, par exemple un numéro de série, un code-barre, un datagramme, etc, afin d'identifier aisément chaque cible et donc le porte-outil respectivement le support de pièce associé à cette cible, et donc de s'assurer qu'une pièce particulière est bien usinée avec le porte-outil et le support de pièce associé. L'identification unique de porte-outil peut aussi être utilisée pour retrouver dans la mémoire informatique de la commande numérique 1211 les paramètres associés à ce porte-outil, par exemple les valeurs d'offset, de zéros etc.

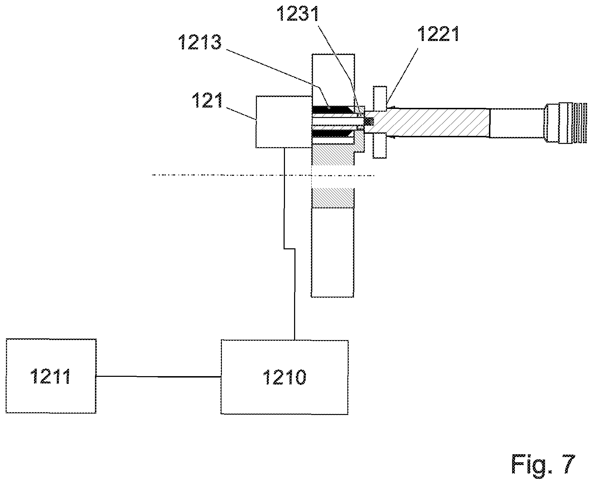

La figure 7 illustre schématiquement un mode de réalisation d'un système de vérification de positionnement. Dans cet exemple, le dispositif de contrôle de positionnement comporte un objectif de type microscope 1213 et une caméra CCD 121 d'un côté des cibles 1221, 1231, et une illumination 1212 de l'autre côté des cibles. La lumière générée par l'illumination 1212 traverse les cibles superposées et atteint la caméra CCD 121 qui capture une image ou une séquence d'image agrandies grâce à l'objectif 1213. Un module de vision 1210, par exemple un programme informatique, traite les images capturées par la caméra CCD afin de vérifier l'alignement des cibles. Les résultats fournis par ce module peuvent être transmis à la commande numérique 1211 qui commande le module de mise au point respectivement le module d'usinage, et utilisés pour commander les moteurs 1226, 1224 afin de déplacer le ou les porte-outils durant l'usinage en compensant l'erreur observée. Un mécanisme manuel de correction de position, par exemple à l'aide de vis micrométriques, peut aussi être mis en oeuvre. Dans une variante, les erreurs de position dans le module de mise au point ne sont pas corrigées, ou pas entièrement corrigées, mais stockées en relation avec les cibles concernées, afin de reproduire cette erreur lors de la production sur le module d'usinage.

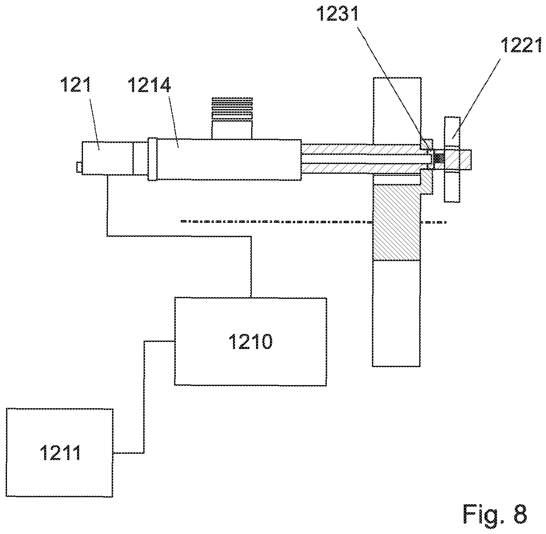

La figure 8 illustre schématiquement un autre mode de réalisation d'un système de vérification de positionnement. Dans cet exemple, le dispositif de contrôle de positionnement comporte un objectif de type microscope 1214 avec illumination coaxiale, et une caméra CCD 121 du même côté par rapport aux cibles 1221, 1231. La lumière générée par l'illumination est réfléchie par les cibles superposées et atteint la caméra CCD 121 qui capture une image ou une séquence d'image agrandies grâce à l'objectif 1214. Comme ci-dessus, un module de vision 1210, par exemple un programme informatique, traite les images capturées par la caméra CCD afin de vérifier le positionnement des cibles et d'effectuer ou de mémoriser une correction via la commande numérique 1211.

### Numéros de référence employés sur les figures

- 110: Module d'usinage
- 112, 212: Capot de protection
- 112a: Paroi latérale
- 112b: Paroi latérale
- 112c: Paroi supérieure
- 112d: Paroi inférieure liée au bâti
- 112e: Paroi arrière
- 112f: Paroi avant
- 114: Enceinte
- 120: Ensemble d'usinage
- 121: Dispositif de contrôle de positionnement
- 1210: Module de vision
- 1211: Commande numérique
- 1212: Illumination
- 1213: Objectif type microscope
- 1214: Objectif avec illumination coaxiale
- 122: Porte-outil amovible
- 1220: Groupe d'outils
- 1221: Référence de positionnement du porte-outil, cible optique
- 1222: Support de cible
- 1223: Dispositif de fixation du porte-outil
- 1224: Dispositif de correction de position en x du porte-outil (moteur)
- 1225: Encodeur du moteur 1224
- 1226: Dispositif de correction de position en y du porte-outil (moteur)
- 1227: Encodeur du moteur 1226
- 1228: Pointe d'un des outils
- 123: Support de pièce (canon, mandrin et/ou pince)
- 1231: Référence de positionnement du support de pièce, cible optique
- 1232: Dispositif de fixation de support de pièce
- 124: Broche
- 125, 225: Contre-broche
- 126: Base de support
- 127: Magasin de barres à usiner
- 128: Bac à copeaux
- 129: Bac à huile
- 130, 230: Chariot mobile
- 132: Rails de guidage
- 140, 240: Cheminée d'évacuation de vapeurs
- 142, 242: Lampe de signalisation
- 210: Unité de mise au point
- 260: Capteur ou caméra
- 261: Ecrans

## Revendications

1. Ensemble d'accessoires pour module d'usinage par enlèvement de copeau, comportant :
au moins un porte-outil (122) muni d'une première cible (1221) comme référence de positionnement;
un support de pièce (123) muni d'une deuxième cible (1231) comme référence de positionnement, la première cible (1221) et la deuxième cible (1231) étant constituées par des cibles optiques et étant agencées pour coopérer afin de permettre la mesure de leur position relative et de leur direction de déplacement relative lorsque la première cible (1221) et la deuxième cible (1231) sont superposées.

2. Ensemble d'accessoires selon la revendication 1, ladite première cible (1221) et ladite deuxième cible (1231) étant agencées pour permettre leur alignement et leur superposition.

3. Ensemble d'accessoires selon l'une des revendications 1 ou 2, au moins un dit porte-outil (122) étant prévu pour être monté de manière amovible sur un chariot d'un module d'usinage.

4. Ensemble d'accessoires selon l'une des revendications 1 à 3, le support de pièce étant prévu pour être monté de manière amovible sur un module d'usinage.

5. Ensemble d'accessoires selon la revendication 3, dans lequel au moins un groupe d'outils, comportant plusieurs outils disposés les uns à côté des autres, est solidaire dudit porte-outil .

6. Module d'usinage comportant :
au moins un porte-outil (122) muni d'une première référence de positionnement (1221) ;
un support de pièce (123) muni d'une deuxième référence de positionnement (1231) ;
un dispositif de contrôle de positionnement (121) pour vérifier le positionnement de la première référence de positionnement avec la deuxième référence de positionnement, dans lequel lesdites première et deuxième références de positionnement sont constituées par des cibles optiques (1221, 1231) qui sont agencées pour coopérer afin de permettre la mesure de leur position relative et de leur direction de déplacement relative lorsque la première cible (1221) et la deuxième cible (1231) sont superposées.

7. Module d'usinage selon la revendication 6, au moins un dit porte-outil (122) étant monté de manière amovible.

8. Module d'usinage selon l'une des revendications 6 ou 7, le support de pièce (123) étant monté de manière amovible.

9. Module d'usinage selon l'une des revendications 6 à 8, comportant un module pour mesurer la distance entre un dit porte-outil (122) et une référence liée au support de pièce (123).

10. Module d'usinage selon l'une des revendications 6 à 9, comportant un module pour mesurer la direction de déplacement dudit porte-outil (122) dans un référentiel lié au support de pièce (123).

11. Module d'usinage selon l'une des revendications 6 à 10, muni d'un dispositif de correction de position (1226, 1224) pour déplacer au moins un porte-outil (122) par rapport audit support de pièce (123).

12. Module d'usinage selon l'une des revendications 6 à 11, comportant une caméra (121) pour vérifier le positionnement desdites cibles optiques (1221, 1231) en filmant les cibles superposées.

13. Module d'usinage selon l'une des revendications 6 à 11, comportant un système optique capable de saisir une image desdites cibles optiques (1221, 1231) superposées, afin de vérifier leur positionnement relatif.

14. Module d'usinage selon la revendication 12, comportant un objectif (1213) et ladite caméra (121) d'un côté desdites cibles (1221, 1231) et une illumination (1212) de l'autre côté desdites cibles (1221, 1231), la lumière générée par l'illumination (1212) étant apte à traverser les cibles superposées et atteindre la caméra (121) qui capture une image ou une séquence d'image agrandie(s) grâce à l'objectif (1213).

15. Module d'usinage selon la revendication 12, comportant un objectif (1214) avec illumination coaxiale et ladite caméra (121) du même côté par rapport aux cibles (1221, 1231), la lumière générée par l'illumination étant apte à être réfléchie par les cibles superposées et atteindre la caméra (121) qui capture une image ou une séquence d'image agrandie(s) grâce à l'objectif (1214).

16. Module d'usinage selon l'une des revendications 12 à 15, comportant en outre un module de vision (1210) qui traite les images capturées par le système optique ou par la caméra afin de vérifier l'alignement desdites cibles optiques (1221, 1231).

17. Procédé de mise en train d'un module d'usinage (110) pour la production d'une série de pièces spécifiques, comprenant :
sélection d'un ensemble d'accessoires selon l'une des revendications 1 à 3, ledit ensemble d'accessoires étant destiné à l'usinage desdites pièces spécifiques;
montage du support de pièce (123) sur un bâti du module d'usinage (110)
montage d'au moins un porte-outil (122) sur ledit bâti ;
positionnement dudit porte-outil (122) de manière à superposer une première référence de positionnement liée à un porte-outil et formée d'une première cible optique (1221) avec une deuxième référence de positionnement liée au support de pièce (123) et formée d'une deuxième cible optique (1231).

18. Procédé de mise en train selon la revendication 17, comprenant, lors de l'étape de positionnement, l'alignement de ladite première cible (1221) avec ladite deuxième cible (1231).

19. Procédé de mise en train selon la revendication 17 ou 18, ledit porte-outil étant monté de manière amovible sur un chariot du module d'usinage (110), avec possibilité de déplacer la position du porte-outil par rapport audit chariot, comprenant, lors de l'étape de positionnement, la correction des erreurs de positionnement du porte-outil par rapport audit chariot.

## Patentansprüche

1. Zubehörbaugruppe für ein spanabhebendes Bearbeitungsmodul, umfassend:
mindestens einen Werkzeughalter (122) mit einem ersten Target (1221) als Positionierungsreferenz;
einen Werkstückträger (123) mit einem zweiten Target (1231) als Positionierungsreferenz, wobei das erste Target (1121) und das zweite Target (1231) aus optischen Targets bestehen und derart angeordnet sind, dass sie zusammenwirken, um die Messung ihrer relativen Position und ihrer relativen Bewegungsrichtung zu ermöglichen, wenn das erste Target (1121) und das zweite Target (1231) übereinanderliegen.

2. Zubehörbaugruppe gemäss Anspruch 1, wobei das besagte erste Target (1221) und das besagte zweite Target (1231) derart angeordnet sind, um ihre Ausrichtung und ihr Überlagerung zu ermöglichen.

3. Zubehörbaugruppe gemäss einem der Ansprüche 1 oder 2, wobei mindestens ein besagter Werkzeughalter (122) zur lösbaren Montage an einem Schlitten eines Bearbeitungsmoduls ausgebildet ist.

4. Zubehörbaugruppe gemäss einem der Ansprüche 1 bis 3, wobei der Werkstückträger zur lösbaren Montage an einem Bearbeitungsmodul ausgebildet ist.

5. Zubehörbaugruppe gemäss Anspruch 3, worin mindestens eine Werkzeuggruppe, welche mehrere nebeneinander angeordnete Werkzeuge umfasst, mit dem besagten Werkzeughalter fest verbunden ist.

6. Bearbeitungsmodul, umfassend:
mindestens einen Werkzeughalter (122) mit einer ersten Positionierungsreferenz (1221);
einen Werkstückträger (123) mit einer zweiten Positionierungsreferenz (1231);
eine Positioniersteuervorrichtung (121) zum Überprüfen der Positionierung der ersten Positionierreferenz mit der zweiten Positionierreferenz, worin die besagten ersten und zweiten Positionierungsreferenzen aus optischen Targets (1221, 1231) bestehen und derart angeordnet sind, dass sie zusammenwirken, um die Messung ihrer relativen Position und ihrer relativen Bewegungsrichtung zu ermöglichen, wenn das erste Target (1121) und das zweite Target (1231) übereinanderliegen.

7. Bearbeitungsmodul gemäss Anspruch 6, wobei mindestens ein besagter Werkzeughalter (122) lösbar montiert ist.

8. Bearbeitungsmodul gemäss einem der Ansprüche 6 oder 7, wobei der Werkstückträger (123) lösbar montiert ist.

9. Bearbeitungsmodul gemäss einem der Ansprüche 6 bis 8, umfassend ein Modul zum Messen des Abstands zwischen einem besagten Werkzeughalter (122) und einer mit dem Werkstückträger (123) verbundenen Referenz.

10. Bearbeitungsmodul gemäss einem der Ansprüche 6 bis 9, umfassend ein Modul zum Messen der Bewegungsrichtung des besagten Werkzeughalters (122) in einem mit dem Werkstückträger (123) verbundenen Bezugsrahmen.

11. Bearbeitungsmodul gemäss einem der Ansprüche 6 bis 10, mit einer Positionskorrekturvorrichtung (1226, 1224) zum Bewegen mindestens eines Werkzeughalters (122) in Bezug auf den besagten Werkstückträger (123) versehen.

12. Bearbeitungsmodul gemäss einem der Ansprüche 6 bis 11, mit einer Kamera (121) zur Überprüfung der Positionierung der besagten optischen Targets (1221, 1231) durch Filmen der übereinanderliegenden Targets.

13. Bearbeitungsmodul gemäss einem der Ansprüche 6 bis 11, mit einem optischen System, welches in der Lage ist, ein Bild der besagten optischen übereinanderliegenden Targets (1221, 1231) aufzunehmen, um ihre relative Positionierung zu überprüfen.

14. Bearbeitungsmodul gemäss Anspruch 12, umfassend ein Objektiv (1213) und die besagte Kamera (121) auf einer Seite der besagten Targets (1221, 1231) und eine Beleuchtung (1212) auf der anderen Seite der besagten Targets (1221, 1231), wobei das durch die Beleuchtung (1212) erzeugte Licht in der Lage ist, die übereinanderliegenden Targets zu durchdringen und die Kamera (121) zu erreichen, welche dank dem Objektiv (1213) ein vergrössertes Bild oder eine vergrösserte Bildsequenz erfasst.

15. Bearbeitungsmodul gemäss Anspruch 12, umfassend ein Objektiv (1214) mit koaxialer Beleuchtung und die besagte Kamera (121) auf derselben Seite in Bezug auf die Targets (1221, 1231), wobei das durch die Beleuchtung (1212) erzeugte Licht in der Lage ist, durch die übereinanderliegenden Targets reflektiert zu werden und die Kamera (121) zu erreichen, welche dank dem Objektiv (1214) ein vergrössertes Bild oder eine vergrösserte Bildsequenz erfasst.

16. Bearbeitungsmodul gemäss einem der Ansprüche 12 bis 15, zudem mit einem Sichtmodul (1210), welches die durch das optische System oder durch die Kamera erfassten Bilder verarbeitet, um die Ausrichtung der besagten optischen Targets (1221, 1231) zu überprüfen.

17. Verfahren zum Starten eines Bearbeitungsmoduls (110) für die Herstellung einer Reihe spezifischer Teile, umfassend:
Auswählen einer Zubehörbaugruppe gemäss einem der Ansprüche 1 bis 3, wobei die besagte Zubehörbaugruppe zur Bearbeitung der besagten spezifischen Teile vorgesehen ist;
Anbringen des Werkstückträgers (123) an einem Rahmen des Bearbeitungsmoduls (110);
Anbringen von mindestens einem Werkzeughalter (122) am besagten Rahmen;
Positionieren des besagten Werkzeughalters (122) derart, um eine erste Positionierungsreferenz, welche mit einem Werkzeughalter verbunden ist und aus einem ersten optischen Target (1221) besteht, mit einer zweiten Positionierungsreferenz, welche mit Werkstückträger (123) verbunden ist und aus einem zweiten optischen Target (1221) besteht, zu überlagern.

18. Startverfahren gemäss Anspruch 17, umfassend, während des Positionierungsschrittes, die Ausrichtung des besagten ersten Targets (1221) mit dem besagten zweiten Targets (1231).

19. Startverfahren gemäss Anspruch 17 oder 18, wobei der besagte Werkzeughalter lösbar an einem Schlitten des Bearbeitungsmoduls (110) montiert ist, mit der Möglichkeit, die Position des Werkzeughalters in Bezug auf den besagten Schlitten zu bewegen, umfassend, während des Positionierungsschrittes, das Korrigieren von Positionierungsfehlern des Werkzeughalters in Bezug auf den besagten Schlitten.

## Claims

1. An assembly of accessories for a machining module that machines by the removal of chips, comprising:
at least one tool holder (122) equipped with a first target (1221) as positioning reference;
a workpiece support (123) equipped with a second target (1231) as positioning reference, the first target and the second target consisting of optical targets and being designed to collaborate so as to allow their relative position to be measured and their relative direction of travel to be measured when the first target and the second target are superposed.

2. The assembly of accessories as claimed in claim 1, said first target and said second target being designed to be mutually aligned and superposed.

3. The assembly of accessories as claimed in claim 1 or 2, at least one said tool holder (122) being designed to be mounted removably on a carriage of a machining module.

4. The assembly of accessories as claimed in one of claims 1 and 2, the workpiece support being designed to be mounted removably on a machining module.

5. The assembly of accessories as claimed in claim 3, wherein at least one group of tools comprises several tools next to one another, said group of tools being attached to said tool holder.

6. A machining module comprising:
at least one tool holder (122) equipped with a first positioning reference (1221);
a workpiece support (123) equipped with a second positioning reference (1231);
a position checking device (121) for checking the positioning of the first positioning reference with the second positioning reference, wherein
said first and second positioning references consists of optical targets (1221, 1231), said optical targets being designed to collaborate so as to allow their relative position to be measured and their relative direction of travel to be measured when the first target (1221) and the second target (1231) are superposed.

7. The machining module as claimed in claim 6, at least one said tool holder (122) being mounted removably.

8. The machining module as claimed in one of claims 6 and 7, the workpiece support (123) being mounted removably.

9. The machining module as claimed in one of claims 6 to 8, comprising a module that measures the distance between one said tool holder (122) and a reference associated with the workpiece support (123).

10. The machining module as claimed in one of claims 6 to 9, comprising a module that measures the direction of travel of said tool holder (122) in a frame of reference associated with the workpiece support (123).

11. The machining module as claimed in one of claims 6 to 10, equipped with a position correction device (1226, 1224) for moving at least one tool holder (122) with respect to said workpiece support (123).

12. The machining module as claimed in one of claims 6 to 11, comprising a camera (121) for checking the positioning of said optical targets (1221, 1231) by filming the superposed targets.

13. The machining module as claimed in one of claims 6 to 11, comprising an optical system capable of capturing an image of said superposed optical targets, so as to check the relative positioning of said optical targets.

14. The machining module as claimed in claim 12, comprising further an objective lens (1213) and said camera (121) on one side of the optical targets (1221, 1231), and an illumination (1212) on the other side of said optical targets (1221, 1231), wherein the light generated by the illumination (1212) is able to pass through the superposed optical targets and to reach the camera (121), wherein said camera (121) captures an image or sequence of images that are enlarged, by virtue of the objective lens (1213).

15. The machining module as claimed in claim 12, comprising further an objective lens (1214) with coaxial illumination, said objective lens (1214) and said camera (121) being on the same side of the targets (1221, 1231), wherein the light generated by the illumination is able to be reflected off the superposed targets and to reach the camera (121), wherein said camera captures an image or a sequence of images which are enlarged, by virtue of the objective lens (1214).

16. The machining module as claimed in one of claims 12 to 15, comprising further a viewing module (1210) configured to process the images captured by the optical system or by the camera so as to check the alignment of the optical targets (1221, 1231).

17. A method for starting up a machining module (110) for the production of a production series of specific components, comprising:
selection of an assembly of accessories as claimed in one of claims 1 to 3, said assembly of accessories being intended for the machining of said specific components;
mounting the workpiece support (123) on a bed of the machining module (110);
mounting at least one tool holder (122) on said bed;
positioning said tool holder (122) in such a way as to superpose a first positioning reference associated with a tool holder and formed by a first optical target (1221) with a positioning reference associated with the workpiece support (123) and formed by a second optical target (1231).

18. The method for starting up as claimed in claim 17, comprising, during the positioning step, the alignement of said first optical target (1221) with said second optical target (1231).

19. The method for starting up as claimed in claim 17 or 18, wherein said tool holder is removably mounted on a carriage of the machining module (110), the position of the tool holder with respect to the carriage being possibly moved, comprising, during the positioning step, correction of the errors in the positioning of the tool holder with respect to the carriage.
